Europäisches Patentamt

European Patent Office

Office européen des brevets

(19)

(11) **EP 1 372 484 B1**

(12) **EUROPÄISCHE PATENTSCHRIFT**

(45) Veröffentlichungstag und Bekanntmachung des Hinweises auf die Patenterteilung:
**29.06.2005 Patentblatt 2005/26**

(21) Anmeldenummer: **02735025.5**

(22) Anmeldetag: **04.04.2002**

(51) Int Cl.$^7$: **A61B 6/00**, G01N 23/04

(86) Internationale Anmeldenummer:
**PCT/DE2002/001217**

(87) Internationale Veröffentlichungsnummer:
**WO 2002/080772 (17.10.2002 Gazette 2002/42)**

(54) **ANORDNUNG ZUR MESSTECHNISCHEN ERFASSUNG EINER PROJEKTION DES STRAHLUNGSABSORPTIONSVERMÖGENS EINES PERIODISCH VERÄNDERLICHEN MESSOBJEKTS**

ARRANGEMENT FOR THE DETERMINATION BY MEASUREMENT OF A PROJECTION OF THE RADIATION ABSORPTION CAPACITY OF A PERIODICALLY-VARIABLE MEASURED OBJECT

ENSEMBLE DE DETECTION PAR MESURE D'UNE PROJECTION DE LA CAPACITE D'ABSORPTION DE RAYONNEMENT D'UN OBJET A VARIATION PERIODIQUE

(84) Benannte Vertragsstaaten:
**AT BE CH CY DE DK ES FI FR GB GR IE IT LI LU MC NL PT SE TR**

(30) Priorität: **07.04.2001 DE 10117569**

(43) Veröffentlichungstag der Anmeldung:
**02.01.2004 Patentblatt 2004/01**

(73) Patentinhaber: **Forschungszentrum Rossendorf e.V.**
**01328 Dresden (DE)**

(72) Erfinder:
• **PRASSER, Horst-Michael**
**01324 Dresden (DE)**
• **ZSCHAU, Jochen**
**01324 Dresden (DE)**

(56) Entgegenhaltungen:
**EP-A- 1 013 225          US-A- 4 585 008**

**Beschreibung**

Die Erfindung betrifft eine Anordnung zur messtechnischen Erfassung einer Projektion des Strahlungsabsorptionsvermögens eines periodisch veränderlichen Messobjekts. Die Anwendung ist insbesondere als tomographische Anordnung zur Erzeugung von Schnittbildern von Objekten gegeben, deren Gestalt beziehungsweise Zusammensetzung schnellen Änderungen unterworfen ist, und zwar für den Fall, dass die Änderungen sich zeitlich periodisch wiederholen. Zur Abbildung werden örtliche Unterschiede im Schwächungsverhalten für ionisierende Strahlung innerhalb des Objekts genutzt.

Die Tomographie mit ionisierender Strahlung, meist Röntgen- oder Gammastrahlung, ist

ein in Medizin und Technik breit genutztes Verfahren. Das Objekt wird hierfür mit Quanten durchstrahlt, die von einer nahezu punktförmigen Strahlungsquelle ausgehen. Die Intensität der das Objekt durchdringenden Strahlung wird auf der der Quelle gegenüberliegenden Seite mit Hilfe einer Detektoranordnung messtechnisch erfasst. Das Signal eines einzelnen Detektors liefert ein Maß für die Schwächung der Strahlung durch das Objekt, die sich aus dem Integral über die Verteilung des Absorptionsverhaltens entlang der Verbindungslinie zwischen der Quelle und dem jeweiligen Detektor ergibt. Die Signale aller Detektoren der Anordnung stellen eine Projektion der Verteilung des Schwächungsvermögens des Objekts in Ausbreitungsrichtung der Strahlung dar. Durch Veränderung der Position der Quelle und der Detektoranordnung wird aus unterschiedlichen Blickrichtungen eine Anzahl von unabhängigen Projektionen der Verteilung gewonnen. Aus diesen Projektionen kann mit Hilfe von numerischen Rekonstruktionsverfahren die Verteilung des Schwächungsverhaltens im Objekt rekonstruiert werden, die Aufschluss über Struktur und Zusammensetzung im Innern des Objekts gibt.

Typische Tomographieanordnungen verwenden eine Röntgenröhre mit möglichst kleinem Brennfleck oder eine annähernd punktförmige Gammaquelle zur Generierung eines fächerförmigen Strahls, der das Objekt in einer festgelegten Ebene durchdringt. Auf der gegenüberliegenden Seite befindet sich ein Bogen aus einer Anzahl in dieser Ebene nebeneinander angeordneter Strahlungsdetektoren. Die Detektoren liefern in diesem Fall eine eindimensionale Projektion der zweidimensionalen Verteilung des Schwächungsvermögens des Objekts in der Schnittebene, der sog. Bildebene, die durch den Fächerstrahl gebildet wird. In den meisten Fällen, so auch bei medizinischen Anwendungen, wird die Anordnung aus Quelle und Detektorbogen um das Objekt in der Bildebene drehbar angeordnet, um Projektionen aus möglichst vielen unterschiedlichen Richtungen zu erhalten. Daraus wird die zweidimensionale Verteilung des Schwächungsvermögens in der Bildebene durch Anwendung tomographischer Bildrekonstruktionsverfahren ermittelt.

Es ist ebenfalls Stand der Technik, bei ruhender Tomographieanordnung das Objekt drehbar anzuordnen. Diese Methode wird für die Untersuchung von technischen Objekten genutzt. Die Ermittlung der Flüssigkeitsverteilung in einem Rieselbettreaktor mit einer derartigen Anordnung wird in (D. Schmitz, N. Reinecke, G. Petritsch, D. Mewes — X-Ray Computed Tomography for Stationary Multiphase Flow in Random and Structured Packings, Proc. Frontiers in Industrial Process Tomography, Delft 9.-12.4.1997, proc. pp. 303-308) beschrieben.

Es sind auch Tomographieanordnungen bekannt, bei denen ein konischer Strahl angewandt wird, der nach Durchdringen des Objekts von einem zweidimensionalen Detektorarray erfasst wird (I. Tiseanu, M. Simon: High Resolution Cone-Beam Tomography for Two-Phase Flow Diagnostics, 2nd International Symposium on Two-Phase Flow Modelling and Experimentation, Pisa, Italy, May 23-26, 1999, proceedings pp. 1485-1492). In diesem Fall wird in einem Schritt eine zweidimensionale Projektion der dreidimensionalen Absorptionsverteilung im Objekt ermittelt. Die Projektionen, die durch Drehung der Anordnung um das Objekt erhalten werden, können in diesem Fall zur Rekonstruktion eines räumlichen Abbilds des Objekts dienen.

Aufgrund des Quantencharakters der Strahlung ist die Messgenauigkeit von der Anzahl der am jeweiligen Detektor registrierten Quanten abhängig. Die Standardabweichung der Intensitätsmessung ist direkt proportional zur Quadratwurzel der Anzahl der registrierten Quanten, wobei die Anzahl der Quanten mit wachsender Messzeit linear zunimmt. Zur Erzeugung von Projektionen mit der für eine anschließende Bildrekonstruktion ausreichenden Messgenauigkeit ist typischerweise eine Messzeit in der Größenordnung von einigen Sekunden bis Minuten je Projektion erforderlich. Die Messzeit lässt sich nur durch Verwendung immer intensiverer Quellen reduzieren, was insbesondere bei der Gamma-Tomographie zu Strahlenschutzproblemen führt. Die Gammatomographie ist jedoch besonders dort von Bedeutung, wo größere und schwerer zu durchdringende Objekte (z.B. metallische Bauteile) zu durchstrahlen sind, da mit Gammaquellen wesentlich leichter und kostengünstiger höhere Strahlungsenergien und damit eine bessere Durchdringung erzielt werden können, als mit Röntgenquellen.

Aus den genannten Gründen war die gamma- oder röntgentomographische Beobachtung schnell ablaufender Vorgänge in technischen Objekten, die meist schwer von der Strahlung zu durchdringen sind, nicht möglich. Lediglich unter Nutzung von Röntgenstrahlung sind Tomographieanordnungen bekannt, die eine zeitlich hochauflösende Beobachtung ermöglichen, indem die hohe Strahlungsintensität der Röntgenquelle in Kombination mit der elektronischen Steuerbarkeit des Elektronenstrahls, der zur Erzeugung der Bremsstrahlung verwendet wird, genutzt wird, um in kürzester Zeit die erforderliche Menge an Projektionen zu erhalten. Ein solcher Tomograph wird in (D. P. Boyd, J. L. Couch, S. A. Napel, K. R. Peschmann, R. E. Rand - Ultra Cine CT for Cardiac Imaging : Where Have We Been? What Lies Ahead ?, American Journal of Cardiac Imaging, 1 (1987) 2, pp 175-185) beschrieben. Bei dieser für die Untersuchung schneller Vorgänge in der Kardiologie entwickelten Anordnung wird der Elektronenstrahl mit Hilfe von Ablenkspulen über einen Winkel von 210° auf einem Wolfram-Targetring um den Patienten geführt und erzeugt so einen rotierenden Fächer von Röntgenstrahlung. Deren Intensität wird nach Durchstrahlung des Patienten durch einen feststehenden Ring von 864 Szintillator/Photodioden-Kanälen registriert. Die Anlage arbeitet mit einer Beschleunigungsspannung von 130 kV und ermöglicht Stromstärken bis zu 640 mA. Mit dem nach diesem Konzept von der Firma IMATRON produzierten Tomographen lassen sich Scanzeiten für eine Abbildung von 50 ms zuzüglich eines 8 ms - Intervalls zwischen zwei Scans erreichen. Er ist damit die mit Abstand schnellste kommerzielle Anlage.

Noch höhere Zeitauflösungen werden von Anordnungen erreicht, bei denen die Drehung der Projektionsrichtung durch das sequentielle Ansteuern einer Anzahl von Röntgenröhren erreicht wird, die um das Objekt herum angeordnet sind. Eine derartige Anordnung mit 18 pulsbaren Röntgenröhren wurde von (M. Misawa, N. Ichikawa, M. Akai, K. Hori, K. Tamura, G. Matsui - Ultra Fast X-Ray CT Systems for Measurement of Dynamic Events in Two-Phase Flow, Advances in Thermal Hydraulics (Proc. ICONE6), 1998) beschrieben. Mit diesem Gerät kann die Gasgehaltsverteilung in einer Zweiphasenströmung aus Wasser und Luft in einer senkrechten Rohrleitung mit ca. 50 mm Durchmesser mit einer Zeitauflösung von 4 ms ermittelt werden, so dass einzelne Gasblasen sichtbar werden. Innerhalb dieser Zeitspanne werden alle 18 Röntgenröhren nacheinander kurzzeitig angesteuert. Die Röhren verfügen hierzu über eine Steuerelektrode, die sich zwischen der Kathode und der Anode befindet. Ein weiterer derartiger Tomograph wird in (K. Hori, T. Fujimoto, K. Kawanishi, H. Nishikawa - Advanced High Speed X-Ray CT Scanner for Measurement and Visualization of Multi-Phase Flow, OECD/CSNI Specialist Meeting, Santa Barbara (CA), 1997) beschrieben, bei dem 66 Röntgenquellen zum Einsatz kommen. Die Messzeit zur Ermittlung einer Verteilung beträgt hier 0,5 ms. Bei beiden Anordnungen liegt die Energie der Strahlung unterhalb von 150 keV, was eine Anwendung auf größere Objekte aus stärker absorbierenden (z.B. metallischen) Werkstoffen ausschließt.

Die Verwendung von Gammaquellen mit entsprechend höherer und daher für stärker absorbierende Objekte besser geeigneter Strahlungsenergie erlaubt jedoch nicht die erforderliche Steuerung der Quelle. Bei Gammatomographen besteht die einzige Möglichkeit zur Veränderung der Projektionsrichtung in der mechanischen Rotation der Anordnung aus Quelle und Detektor oder in der Umkreisung des Objekts durch die Quelle bei Nutzung eines feststehenden Rings aus Detektoren. Es ist weder möglich die Quelle zu pulsen, noch sie zur Gewinnung von Projektionen unter verschiedenen Blickrichtungen mit elektrischen oder magnetischen Feldern zu beeinflussen oder den Strahl abzulenken. Mechanische Systeme haben jedoch bei Scannzeiten von einigen Sekunden ihre Grenzen. Ein bekannter Tomograph für Zweiphasenströmungen, dessen Zeitauflösung in den Sekundenbereich vordringt, arbeitet mit einer Gammaquelle, die das Objekt in 2 Sekunden umläuft, während ein Ring aus Detektoren feststeht (A. C. De Vuono, P. A. Schlosser, F. A. Kulacki and P. Munshi - Design of an Isotopic CT Scanner for Two-Phase Flow Measurements - IEEE Transactions on Nuclear Science, Vol. NS-27, No. 1, Feb. 1980). Die Ausweichvariante der Nutzung von mehreren stationären Quellen (T. Frøystein - Flow Imaging by Gamma-ray Tomography: Data Processing and Reconstruction Techniques, Systems - Proc. Frontiers in Industrial Process Tomography II, 8.-12.4.97, Delft (NL), 185-187) weist den Nachteil auf, dass nur eine geringe Anzahl von Projektionen erhalten werden kann, da sich die einzelnen Strahlenfächer ansonsten überlappen würden. Damit ist die Qualität der erzielbaren Bildrekonstruktion gering und die räumliche Auflösung unbefriedigend.

Aufgabe der Erfindung ist es, eine Anordnung vorzuschlagen, die auch bei Objekten, deren Gestalt beziehungsweise Zusammensetzung schnellen, sich periodisch wiederholenden Änderungen unterworfen sind, die Ermittlung von Projektionen gestattet, die einen Momentanzustand oder eine Abfolge von Momentanzuständen der periodisch veränderlichen Verteilung des Absorptionsverhaltens repräsentieren und aus denen sich die Verteilungen selbst rekonstruieren lassen und die dabei mit einer kontinuierlich Strahlung aussendenden Gammaquelle auskommt.

Erfindungsgemäß wird die Aufgabe mit den in den Patentansprüchen dargelegten Merkmalen gelöst, Dabei ist wesentlich, dass die Detektoren der Detektoranordnung des Tomographen über einen Signalverteiler mit mehreren Bänken aus Signalintegratoren verbunden werden. Jedem Detektor ist in jeder Bank genau ein Signalintegrator zugeordnet. Der Signalverteiler leitet die Signale der Detektoren dabei stets nur an die Signalintegratoren einer der Bänke, beginnend mit der Bank mit der Nummer 1. Durch einer Steuereinheit, mit der der Signalverteiler verbunden ist, erfolgt nach Verstreichen eines vorgegebenen, konstanten Zeitintervalls, $t_B$ - auch Bankzeit genannt, ein Weiterschalten aller Detektorsignale auf die jeweils folgende Bank von Signalintegratoren. Für die Funktion der Anordnung muss ein Synchronsignal zur Verfügung stehen, welches nach Verstreichen der vollständigen Periode $t_P$ der zeitlichen Veränderung des Objekts erscheint. Dieses Synchronsignal wird mit der Steuereinheit verbunden und veranlasst diese nach Ablauf der Periode der Veränderungen des Objekts auf die erste Bank von Signalintegratoren zurückzuschalten und den Signalverteilungsvorgang von dort aus erneut zu beginnen. Für die Messung wird die Tomographieanordnung aus Quelle und Detektoren in die Position gebracht, die der zu ermittelnden Projektion entspricht. Die Signalintegratoren werden rückgesetzt, um die nachfolgende Integration bei Null zu beginnen. Nach einer vorher festgelegten Anzahl von N Perioden des Objekts wird der Messvorgang unterbrochen. Die danach in jeder einzelnen Bank von Signalintegratoren vorhandenen Messinformationen stellen das Ergebnis der Ermittlung einer Projektion in der durch die eingestellte Ausrichtung von Quellen und Detektoranordnung vorgegebenen Messebene und Richtung dar, die außerdem genau einem sich aus der Nummer der Bank ergebenden Zeitintervall der Dauer $t_B$ zugeordnet ist, die einen Ausschnitt der Periode $t_P$ darstellt. In der Bank mit der Nummer i liegt eine Projektion vor, die dem Zeitintervall $(i-1){\cdot}t_B < t < i{\cdot}t_B$ zuzuordnen ist. Die effektive Messzeit $t_M$, die den statistischen Fehler der Messwerte bestimmt, ergibt sich aus der Anzahl der aufgenommenen Perioden P und dem Zeitintervall $t_B$ zu $t_M = N{\cdot}t_B$. Damit kann die statistische Sicherheit der Messwerte stets durch Erhöhung der Anzahl der Perioden des Objekts verbessert werden, über die die Integration erfolgt.

Zur Durchführung der tomographischen Messung wird weiter in allgemein bekannter Weise verfahren, d.h. die Anordnung aus Quelle und Detektoren wird schrittweise gedreht und der Messvorgang mit der beschriebenen Anordnung für jede Projektionsrichtung wiederholt. Wenn anschließend mit allen Projektionen, die ein und demselben Zeitintervall i entstammen, eine tomographische Bildrekonstruktion durchgeführt wird, so erhält man die gesuchte Verteilung in der Messebene für das Zeitintervall i. Nach Durchführung der Rekonstruktion für alle verfügbaren Zeitintervalle können die einzelnen Ergebnisse zu einer Sequenz zusammengefügt werden, die das sich periodisch verändernde Schnittbild des Objekts wiedergibt. Die Anzahl der zum Aufbau der Sequenz zur Verfügung stehenden Zeitintervalle ergibt sich aus dem Verhältnis $t_P/t_B$.

Nachfolgend wird die Erfindung an zwei Ausführungsbeispielen näher erläutert.
In den zugehörigen Zeichnungen zeigen

    Fig. 1 die erfindungsgemäße Anordnung in ihrer Grundausführung;
    Fig. 2 die Anordnung nach Fig. 1, ergänzt durch einen Computer zur Signalerfassung.

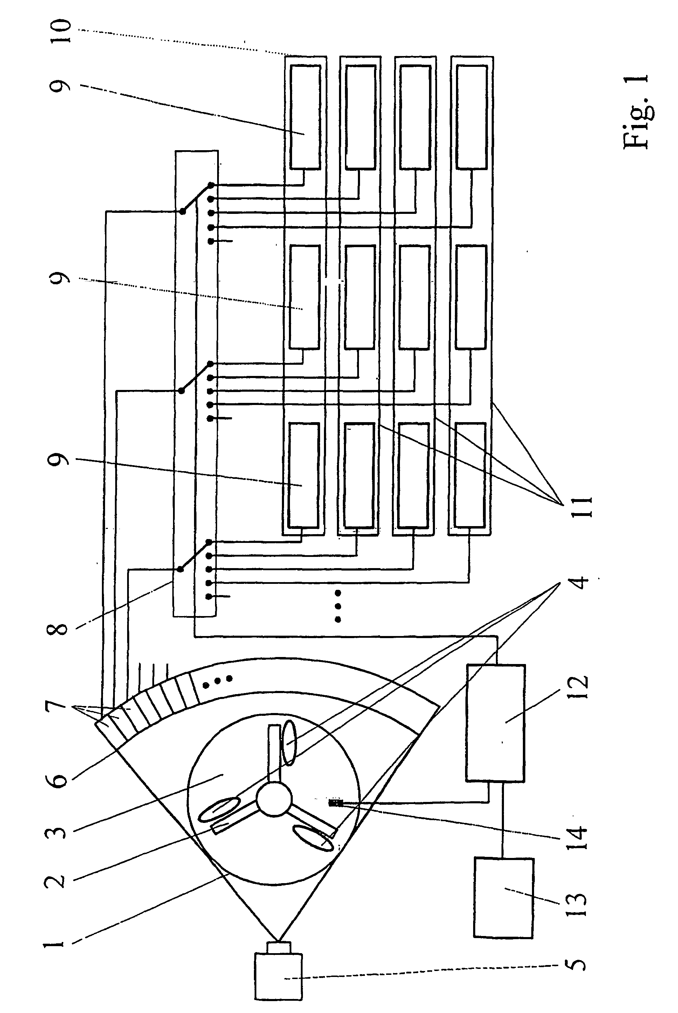

In beiden Ausführungsbeispielen handelt es sich um eine Anordnung zur tomographischen Ermittlung der Dichteverteilung im Laufrad einer in Betrieb befindlichen Axialpumpe, die ein Gemisch aus Gas und Flüssigkeit fördert. Durch die Wechselwirkung zwischen dem Flüssigkeits-Gas-Gemisch und dem Laufrad stellt sich eine charakteristische Verteilung der Gasphase ein, die sich in einer entsprechenden Verteilung der Dichte des Gemischs widerspiegelt. Das Absorptionsvermögen des Gemischs für Gammastrahlung ist proportional zur örtlichen Gemischdichte. Auf Grund der Rotation des Pumpenlaufrades unterliegt die Dichteverteilung periodischen Änderungen, die Periode $t_P$ stimmt mit der Dauer einer Rotation des Laufrades überein. In Fig. 1 ist das Pumpengehäuse 1 im Querschnitt mit dem Laufrad 2 schematisch dargestellt. Angegeben sind beispielhaft Gebiete, die mit der Flüssigphase 3 oder der Gasphase 4 ausgefüllt sind. Beim Laufrad handelt es sich um eine schraubenartige Konstruktion mit drei Schaufeln und einem Durchmesser von 220 mm. In der Schnittdarstellung ergeben sich drei radial von der Welle nach außen laufende Schnittflächen des Laufrads. Die Pumpe wird mit der von der Quelle 5 ausgehenden Gammastrahlung durchstrahlt, die von dem Nuklid Cäsium-137 ausgeht. Die Aktivität beträgt 185 GBq, die Energie 662 keV. Dank der hohen Strahlungsenergie ist es möglich, das Pumpengehäuse 1 und das Laufrad 2 effektiv zu durchstrahlen.

Das erste Ausführungsbeispiel, dargestellt in Fig. 1, soll Projektionen der Dichteverteilung des Messobjekts für vier aufeinanderfolgende kurze Zeitintervalle mit der Dauer $t_B$ ermitteln. Auf der der Quelle 5 gegenüberliegenden Seite befindet sich ein Detektorbogen 6, der aus 64 einzelnen Detektoren 7 für die Gammastrahlung zusammengesetzt ist. Im Ausführungsbeispiel handelt es sich um Szintillationskristalle aus Wismut-Germanat mit optisch angekoppelten Sekundärelektronenvenrielfachem und im Detektorbogen 6 integrierten Signalvorverstärkern mit Impulsausgang. Der Abstand zwischen Quelle 5 und Detektorbogen 6 beträgt 730 mm. Die Detektorkristalle haben eine zur Quelle 5 hin ausgerichtete Stirnfläche von 10 x 10 mm$^2$ und eine Länge von 30 mm. Die Quelle 5 ist mit einem Kollimator zur Erzeugung eines Fächerstrahls ausgerüstet, der auf den Detektorbogen 6 ausgerichtet ist. Die Messebene, die durch die Orientierung des Detektorbogens 6 und des Quellenkollimators gebildet wird, schneidet das Pumpengehäuse 1 senkrecht zur Drehachse des Laufrads 2. Das periodisch veränderliche Messobjekt ist gegeben durch das in der Bildebene befindliche Fördermedium bestehend aus Bereichen, die entweder mit Gas 4 oder mit Flüssigkeit 3 gefüllt sind, sowie dem in der Bildebene befindlichen Querschnitt durch das in Drehung befindliche Laufrad 2 und durch das Pumpengehäuse 1.

Die elektrischen Impulse, die durch die am Detektor 7 eintreffenden Gammaquanten hervorgerufen werden, werden einem Signalumschalter 8 zugeleitet, der jeden der Detektoren 7 mit einem Signalintegrator 9 verbindet. Die Signalintegratoren 9 sind in einer ersten Bank 10 und drei weiteren Bänken 11 zusammengefasst. In Fig. 1 sind nur die ersten drei der 64 Signalintegratoren 9 gezeigt, die zur Erfassung der Signale der vorhandenen 64 Detektoren 7 erforderlich sind. Die Fortsetzung der Anordnung für die Erfassung der Signale der weiteren Detektoren ist jeweils durch drei Punkte kenntlich gemacht. Die Anzahl der Zählerbänke 11 kann im Bedarfsfall verändert werden. Insgesamt wird die Anzahl der Zählerbänke mit B bezeichnet. Im Ausführungsbeispiel nach Fig. 1 ist B = 4.

Bei den Signalintegratoren 9 handelt es sich im Ausführungsbeispiel um Binärzähler, die die vom Detektor 7 registrierten Gammaquanten digital erfassen. Der Signalumschalter 8 verbindet die Detektoren 7 zu einem Zeitpunkt stets nur mit den Zählern 9 der zugehörigen Bank 10 bzw. 11, wobei die in Fig. 1 gezeigte Schaltersteilung dem Zustand zu Beginn der Messung entspricht, d.h. die Detektoren 7 sind mit den Zählern 9 der ersten Bank 10 verbunden. Der Signalverteiler 8 ist mit einer Steuereinheit 12 verbunden, die den Signalumschalter 8 veranlasst, die Signale der Detektoren 7 nach einer vorgegebenen Zeit $t_B$ auf die Zähler 9 der jeweils nachfolgenden Bank der weiteren Zählerbänke 11 weiterzuschalten. Zum Zweck der Zeitablaufsteuerung erhält die Steuerschaltung 12 äquidistante Impulse von einem Taktgeber 13. Nach dem vierten Impuls des Taktgebers 13 schaltet die Steuereinheit 12 den Signalumschalter 8 in die fünfte, nicht an Binärzähler angeschlossene Schalterstellung, wodurch der Zählvorgang unterbrochen wird. Die Steuerschaltung 12 ist außerdem mit einem Drehimpulsgeber 14 verbunden, der bei jeder Umdrehung des Laufrades 2 einen Impuls liefert. Diese Impulse treffen periodisch in einem zeitlichen Abstand von $t_P$ ein. Bei Erscheinen dieses Impulses schaltet die Steuerschaltung 12 den Signalumschalter 8 auf die Zähler 9 der erste Bank 10 zurück.

Nach einer bestimmten, vorgegebenen Anzahl von Umdrehungen des Laufrades 2 wird der Messvorgang gestoppt. Die in den Zählern 9 aufsummierten Impulszahlen entsprechen der Anzahl der von dem jeweiligen Detektor 7 registrierten Gammaquanten, wobei jeder Zähler 9 genau einem Detektor 7 zugeordnet ist und durch seine Zugehörigkeit zu einer der Zählerbänke 10 bzw. 11 ein Zeitintervall innerhalb der Rotationsperiode des Laufrads 2 ebenfalls eindeutig festgelegt ist. Die in der jeweiligen Zählerbank 10 bzw. 11 nach Abschluss der Messung gespeicherte Information stellt somit die gesuchte Projektion der Verteilung des Absorptionsvermögens innerhalb des Messobjekts in der durch den Fächerstrahl gebildeten-Messebene für ein bekanntes Zeitintervall innerhalb der Rotationsperiode da. Mit der in Fig. 1 dargestellten Anzahl von vier Zählerbänken 10 bzw. 11 können vier zeitlich hintereinander liegende Zeitintervalle ausgewertet werden.

Die Dichte- bzw. Gasgehaltsverteilung kann ermittelt werden, indem weiter wie allgemein bekannt verfahren wird und durch Wiederholung des Messvorgangs unter schrittweiser Drehung der Anordnung aus Quelle 5 und Detektorbogen 6 ein Satz von unabhängigen Projektionen aus verschiedenen Blickrichtungen aufgenommen-wird. Aus dem Satz von Projektionen, die aus ein und derselben Zählerbank stammen, kann durch Anwendung tomographischer Rekonstruktionsverfahren die zweidimensionale Dichteverteilung in der Messebene für das der Zählerbank zugeordnete Zeitintervall ermittelt werden. Im Fall der betrachteten Axialpumpe entspricht dieses Zeitintervall einem bestimm-ten Intervall des Drehwinkels φ des Laufrades 2, wobei der Nullpunkt des Drehwinkels durch den Impuls des Drehimpulsgebers 14 bestimmt wird, der bei jeder Umdrehung einmal erscheint. Das Winkelintervall ergibt sich für die Nummer der Zählerbank i wie folgt: $(i-1) \cdot 360° \cdot t_B/t_P < \varphi < i \cdot 360° \cdot t_B/t_P$. Damit ist die rekonstruierte Dichteverteilung auch genau einem vorgegebenen Drehwinkelintervall zugeordnet. Die Winkelauflösung beträgt $\Delta\varphi = 360° \cdot t_B/t_P$.

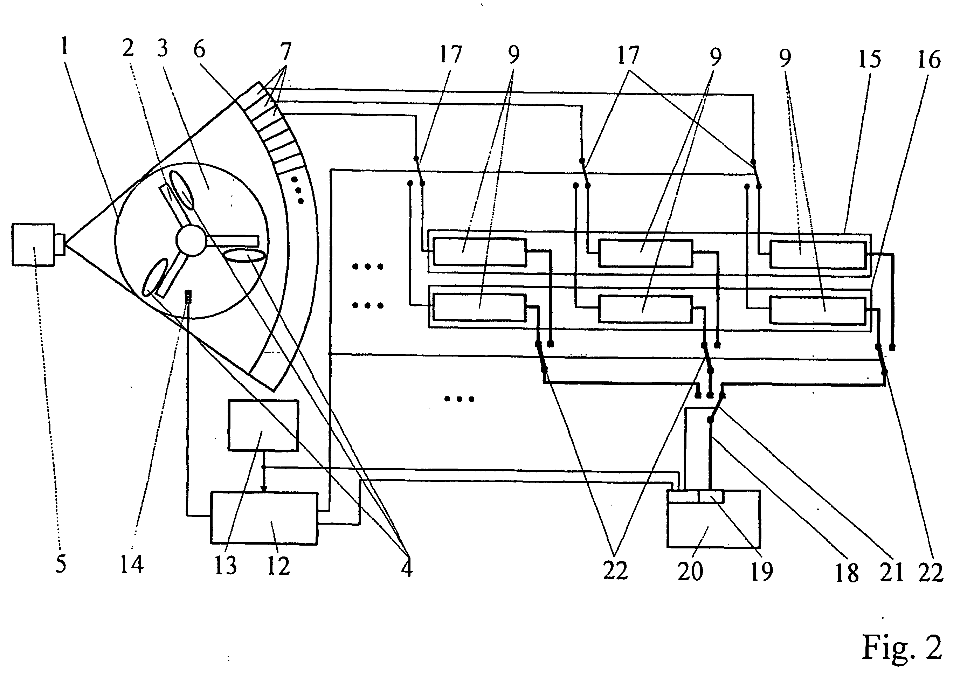

Bei dem Anwendungsbeispiel handelt es sich um eine Pumpe, deren Laufrad 2 mit ca. 1500 U/min rotiert. Daraus ergibt sich eine Umlaufperiode von $t_P = 40$ ms. Im Ausführungsbeispiel wird eine Winkelauflösung von besser als 1° realisiert, woraus sich eine Bankzeit von ca. $t_B = 0,1$ ms ergibt. Um die gesamte Umlaufperiode des Laufrads 2 erfassen zu können, muss die Anzahl der Zählerbänke in der Anordnung in Fig. 1 mindestens $t_P/t_B$ betragen, also bei den angegebenen Werten mindestens 400. Sie entspricht der Anzahl der aufzulösenden Winkelschritte. Es ist somit erforderlich, die Anzahl der Zählerbänke von 4 auf 400 zu erhöhen, wenn die vollständige Erfassung der gesamten Umlaufperiode stattfinden soll. Bei den im Ausführungsbeispiel angewandten 64 Detektoren ergibt sich für die Anordnung nach Fig. 1 eine Gesamtanzahl von Zählerbausteinen von mindestens 400 x 64 = 25600. Um den damit verbundenen Schaltungsaufwand zu reduzieren, wird das zweite Ausführungsbeispiel in Fig. 2 angegeben.

Gegenüber dem Ausführungsbeispiel in Fig. 1 wird die Anordnung hier um einen Datenerfassungsrechner 20 erweitert. Die Anzahl der Zählerbänke vermindert sich gegenüber der Anordnung in Fig. 1 auf zwei Zählerbänke 15 und 16. In Fig. 2 sind ebenfalls nur die den ersten drei von 64 Zählern gezeigt, die den vorhandenen 64 Detektoren 7 zugeordnet sind. Die beiden Zählerbänke 15 und 16 werden mit Hilfe von Signalschaltern 17 wechselseitig mit den zugeordneten Detektoren 7 verbunden, so dass stets nur die Zähler einer der beiden Bänke 15 oder 16 die an den Detektoren 7 registrierten Gammaquanten erfassen. Die digitalen Zählerstände derjenigen Zähler 9 der jeweils nicht mit den Detektoren 7 verbundenen Bank werden über einen Datenbus 18 und ein Parallelinterface 19 von einem Datenerfassungsrechner 20 übernommen. Der Rechner 20 steuert die Datenübemahme durch die Ansteuerung eines Busumschalters 21, der durch die Verwendung von Bustreiberschaltkreisen mit Auswahleingang (Chip-Select-Eingang) realisiert wurde. Dieser Busumschalter 21 verbindet die Ausgang der Zähler 15 oder 16 der auszutesenden Bank nacheinander mit dem Parallelinterface 19 des-Rechners 20. Die Umschaltung der jeweiligen Bank zwischen Zähl- und Lesebetrieb erfolgt durch die Steuereinheit 12, wobei das Umschaltsignal, wie in Fig. 2 dargestellt, parallel zu den Signalschaltern 17, zu Büsschaltern 22 und zum Datenerfassungsrechner 20 geleitet wird. Die in Fig. 2 gezeigte Schalterstellung entspricht dem Zustand, wenn die Zähler 9 der Bank 15 die Impulse der Detektoren 7 erfassen und die Zähler 9 der Bank 16 vom Rechner 20 sequentiell ausgelesen werden.

Die weitere Summierung der Zählergebnisse erfolgt softwaremäßig im Datenerfassungsrechner 20. Im Speicher des Rechners wird ein Datenfeld aufgebaut, das in Form von Spalten und Zeilen einer Datenmatrix aufgebaut ist. Die Anzahl der Spalten stimmt dabei mit der Anzahl der Detektoren 7 überein, die Anzahl der Zeilen entspricht der Anzahl der aufzulösenden Winkelschritte. Die aus den Zählern 15 bzw. 16 sequentiell eingelesenen Daten werden auf die Speicherwerte einer Zeile der Matrix addiert. Nach Wechsel der Zählerbänke 15 und 16 setzt der Rechner 20 diese Summation mit der nächsten nachfolgenden Zeile der Matrix fort. Der Rechner 20 erhält außerdem die Impulse vom Drehimpulsgeber 14, welche die Vollendung jeweils einer vollständigen Umdrehung des Laufrades 2 anzeigen. Bei Eintreffen eines dieser Impulse wird mit der Summation jeweils wieder bei der ersten Zeile der Datenmatrix begonnen. Nach einer bestimmten vorgegebenen Anzahl von Umdrehungen des Laufrades 2 wird der Messvorgang gestoppt. In der Datenmatrix sind dann Zählergebnisse gespeichert, die dem Ergebnis entsprechen, das mit der Anordnung nach Fig. 1 erhalten wird. Dabei reduziert sich der Hardwareaufwand, da nur noch 2 x 64 Zähler erforderlich sind.

**Patentansprüche**

1. Anordnung zur messtechnischen Erfassung einer Projektion des Strahlungsabsorptionsvermögens eines periodisch veränderlichen Messobjekts, bestehend aus einer kontinuierlich Strahlung aussendenden Quelle, sowie einer von der Quelle aus gesehen hinter-dem Messobjekt befindlichen-Anordnung aus Detektoren für die verwendete Strahlungsart, **gekennzeichnet dadurch, dass** die Detektoren (7) über einen Signalumschalter (8) an mehrere Signalintegratoren (9) je Detektor (7) angeschlossen sind, die in einer ersten Bank (10) und weiteren Bänken (11) zusammengefasst sind, dass der Signalumschalter (8) die Detektoren (7) zum gleichen Zeitpunkt nur mit den Signalintegratoren (9) genau einer der Bank (10) oder, Bänke (11) verbindet, dass der Signalumschalter (8) mit einer Steuereinheit (12) verbunden ist, dessen Eingang zum Weiterschalten des Signalumschalters (8) mit einem Taktgeber (13) verbunden ist, und dass dessen Eingang zum Rücksetzen des Signalumschalters (8) auf die Signalintegratoren (9) der ersten Bank (10) mit einem Synchronsignalgeber (14) verbunden ist.

2. Anordnung nach Anspruch 1 **gekennzeichnet dadurch, dass** der Synchronsignalgeber (14) als Phasenwinkeldetektor mit nachgeschaltetem Diskriminator ausgebildet ist, der an ein periodisch veränderliches Teil (2) des Messobjekts angeschlossen ist.

3. Anordnung nach Anspruch 1 **gekennzeichnet dadurch, dass** die Detektoren (7) mit Impulsausgang ausgeführt sind und dass es sich bei den Signalintegratoren (9) um Impulszähler handelt.

4. Anordnung nach Anspruch 1 und 3 **gekennzeichnet dadurch, dass** die Detektoren (7) über einen Signalschalter (17) an die zwei als Impulszähler ausgeführte Signalintegratoren (9) je Detektor (7) angeschlossen sind, die in zwei Bänken (15) und (16) zusammengefasst sind, dass der Signalschalter (17) die Detektoren (7) zum gleichen Zeitpunkt nur mit den Signalintegratoren (9) genau einer der beiden Bänke (15) oder (16) verbindet, und dass die digitalen Ausgänge der Signalintegratoren (9) der Bänke (15) und (16) über einen Busumschalter (22) über einen Datenbus (18) wechselseitig mit einem Datenerfassungsrechner (20) verbunden sind, und dass der Signalschalter (17) und der Busumschalter (22) an eine gemeinsame Steuereinheit (12) angeschlossen sind.

5. Anordnung nach Anspruch 1 oder 2 **gekennzeichnet dadurch, dass** die Detektoren (7) mit elektrischem Analogausgang ausgeführt sind und dass es sich bei den Signalintegratoren (9) um Analogintegratoren handelt.

6. Anordnung nach Anspruch 1 und 3 **gekennzeichnet dadurch, dass** die Detektoren (7) über einen Signalschalter (17) an zwei als Analogintegratoren ausgeführte Signalintegratoren (9) je Detektor (7) angeschlossen sind, die in zwei Bänken (15) und (16) zusammengefasst sind, dass der Signalschalter (17) die Detektoren (7) zum gleichen Zeitpunkt nur mit den Analogintegratoren (9) genau einer der beiden Bänke (15) oder (16) verbindet, und dass die analogen Ausgänge der Analogintegratoren (9) der Bänke (15) und (16) über je einen Analog-Digital-Wandler und einen Busumschalter (22) über einen Datenbus (18) wechselseitig mit einem Datenerfassungsrechner (20) verbunden sind, und dass der Signalschalter (17) und der Busumschalter (22) an eine gemeinsame Steuereinheit (12) angeschlossen sind.

7. Anordnung nach Anspruch 1, 4 oder 6 **gekennzeichnet dadurch, dass** der Taktgeber (13) durch einen am Messobjekt angebrachten Sensor ersetzt wird, der pro Periode der Veränderung des Messobjekts zu mehreren festgelegten Phasen der Änderung des Messobjekts Impulse ausgibt.

8. Anordnung nach Anspruch 1, 4 oder 6 **gekennzeichnet dadurch, dass** nur ein einzelner Detektor (7) und ein einzelner Signalintegrator (9) je Bank (10) und (11) vorgesehen sind.

9. Anordnung nach Anspruch 1, 4 oder 6 **gekennzeichnet dadurch, dass** die Detektoren (7) in einer linearen Detektorzeile oder in einem Detektorbogen (6) angeordnet sind.

10. Anordnung nach Anspruch 1, 4 oder 6 **gekennzeichnet dadurch, dass** mehrere Detektoren (7) in einer zweidimensionalen Matrix angeordnet sind.

**Claims**

1. Arrangement for the determination by measurement of a projection of the radiation absorption capacity of a periodically-variable measured object, consisting of a continuously emitting radiation source located in front of the measured object, and an arrangement located in a straight line from the above source behind the measured object, consisting of detectors for the applied type of radiation. This arrangement is **characterised by** the detectors (7) being connected via a signal switch (8) to several signal integrators (9) per detector (7), whereby these signal integrators are combined on a first bench (10) and a number of additional benches (11); in this arrangement, the signal switch (8) connects the detectors (7) at any given time to the signal integrators (9) of bench (10) or one of the other benches (11) only; the signal switch (8) is connected to a control unit (12) whose input for the switching of the signal switch (8) is connected to a clock generator (13); the input of the clock generator (13) is connected to a synchronisation signal generator (14) for the reset of the signal switch (8) to the signal integrators (9) of the first bench (10).

2. Arrangement according to claim 1, **characterised by** the synchronisation signal generator (14) being designed as a phase angle detector with attached discriminator, which is connected to a periodically-variable part (2) of the measured object.

3. Arrangement according to claim 1, **characterised by** each of detectors (7) being equipped with a pulse output and by signal integrators (9) that are designed as pulse counters.

4. Arrangement according to claims 1 and 3, **characterised** as follows: the detectors (7) are each connected via a signal switch (17) to two signal integrators (9) designed as pulse counters, which are combined in two benches (15) and (16); in this arrangement, the signal switch (17) connects the detectors (7) at any given time to the signal integrators (9) of one of the benches (15) or (16) only; the digital outputs of the signal integrators (9) of benches (15) and (16) are connected bidirectionally via a bus switch (22) and a data bus (18) to a data acquisition computer (20); the signal switch (17) and the bus switch (22) are connected to a shared control unit (12).

5. Arrangement according to claims 1 and 2, **characterised by** each of the detectors (7) being equipped with an electrical analogue output, and by signal integrators (9) being designed as analogue integrators.

6. Arrangement according to claims 1 and 3, **characterised** as follows: the detectors (7) are each connected via a signal switch (17) to two signal integrators (9) designed as analogue integrators, which are combined in two benches (15) and (16); in this arrangement, the signal switch (17) connects the detectors (7) at any given time to the analogue integrators (9) of one of the benches (15) or (16) only; the analogue outputs of the analogue integrators (9) of benches (15) and (16) are connected bidirectionally via an analogue-digital converter each, a bus switch (22) and a data bus (18) to a data acquisition computer (20); the signal switch (17) and the bus switch (22) are connected to a shared control unit (12).

7. Arrangement according to claims 1, 4 and 6, **characterised** as follows: the clock generator (13) is replaced by a sensor attached to the measured object, which generates pulses at various defined phases of change to the measured object during a period of change of the said object.

8. Arrangement according to claims 1, 4 and 6, **characterised** as follows: benches (10) and (11) are to be equipped with a single detector (7) and a single signal integrator (9) each.

9. Arrangement according to claims 1, 4 and 6, **characterised** as follows: the detectors (7) are arranged in a linear row of detectors or in an arc of detectors (6).

10. Arrangement according to claims 1, 4 and 6, **characterised** as follows: several detectors (7) are arranged in a two-dimensional matrix.

**Revendications**

1. Ensemble de détection par mesure d'une projection de la capacité d'absorption de rayonnement d'un objet à variation périodique, composé d'une source émettant un rayonnement continu, ainsi que d'un ensemble de détecteurs pour le type de rayonnement utilisé se trouvant derrière l'objet de mesure du point de vue de la source, **caractérisé en ce que** les détecteurs (7) sont raccordés via un convertisseur de signaux (8) à plusieurs intégrateurs de signaux (9) pour chaque détecteur (7) qui sont réunis dans un premier banc (10) et dans d'autres bancs (11), **en ce que** le convertisseur de signaux (8) relie les détecteurs (7) au même moment uniquement avec les intégrateurs de signaux (9) exactement du banc (10) ou d'un des bancs (11), **en ce que** le convertisseur de signaux (8) est relié à une unité de commande (12), dont l'entrée est reliée à un générateur de rythme (13) pour transférer le convertisseur de signaux (8), et **en ce que** cette entrée est reliée à un générateur de signaux de synchronisation (14) pour réinitialiser le convertisseur de signaux (8) sur les intégrateurs de signaux (9) du premier banc (10).

2. Ensemble selon la revendication 1 **caractérisé en ce que** le générateur de signaux de synchronisation (14) est constitué comme détecteur de l'angle de phase avec discriminateur branché en aval qui est raccordé sur une partie à variation périodique (2) de l'objet.

3. Ensemble selon la revendication 1 **caractérisé en ce que** les détecteurs (7) sont réalisés avec une sortie d'impulsion et **en ce que**, pour les intégrateurs de signaux (9), il s'agit d'un compteur d'impulsions.

4. Ensemble selon les revendications 1 et 3 **caractérisé en ce que** les détecteurs (7) sont raccordés via un convertisseur de signaux (17) aux deux intégrateurs de signaux (9) pour chaque détecteur (7) réalisés comme compteurs d'impulsion, qui sont réunis dans deux bancs (15) et (16), **en ce que** le convertisseur de signaux (17) relie les détecteurs (7) au même moment uniquement avec les intégrateurs de signaux (9) exactement d'un des deux bancs (15) ou (16), et **en ce que** les sorties numériques des intégrateurs de signaux (9) des bancs (15) et (16) sont reliés à un ordinateur de saisie de données (20) réciproquement via un convertisseur de bus (22) par un bus de données (18), et **en ce que** le convertisseur de signaux (17) et le convertisseur de bus (22) sont raccordés à une unité de commande commune (12).

5. Ensemble selon la revendication 1 ou 2 **caractérisé en ce que** les détecteurs (7) sont réalisés avec une sortie analogique électrique et **en ce que**, pour les intégrateurs de signaux (9), il s'agit d'intégrateurs analogiques.

6. Ensemble selon les revendications 1 et 3 **caractérisé en ce que** les détecteurs (7) sont raccordés via un convertisseur de signaux (17) à deux intégrateurs de signaux (9) pour chaque détecteur (7) réalisés comme intégrateurs analogiques, qui sont réunis dans deux bancs (15) et (16), **en ce que** le convertisseur de signaux (17) relie les détecteurs (7) au même moment uniquement avec les intégrateurs analogiques (9) exactement d'un des deux bancs (15) ou (16), et **en ce que** les sorties analogiques des intégrateurs analogiques (9) des bancs (15) et (16) sont reliés à un ordinateur de saisie de données (20) réciproquement via par un convertisseur analogique-numérique et un convertisseur de bus (22) par un bus de données (18), et **en ce que** le convertisseur de signaux (17) et le convertisseur de bus (22) sont raccordés à une unité de commande commune (12).

7. Ensemble selon la revendication 1, 4 ou 6, **caractérisé en ce que** le générateur de rythme (13) est remplacé par un capteur disposé sur l'objet de mesure qui, pour chaque période de variation de l'objet de mesure, émet des impulsions à plusieurs phases déterminées de la variation de l'objet.

8. Ensemble selon la revendication 1, 4 ou 6, **caractérisée en ce qu'**un détecteur individuel (7) et un intégrateur de signaux individuel (9) sont prévus pour chaque banc (10) et (11).

9. Ensemble selon la revendication 1, 4 ou 6, **caractérisé en ce que** les détecteurs (7) sont disposés dans une cellule de détecteurs linéaires ou dans un arc de détecteurs (6).

10. Ensemble selon la revendication 1, 4 ou 6, **caractérisé en ce que** plusieurs détecteurs (7) sont disposés dans une matrice en deux dimensions.

Fig. 1

EP 1 372 484 B1

Fig. 2